# EUROPEAN PATENT APPLICATION

(11) **EP 1 370 096 A2**
(43) Date of publication of application: **10.12.2003**
(21) Application number: 03394048.7
(22) Date of filing: 30.05.2003
(51) Int. Cl.: H04Q 7/22

(54) **Wireless asynchronous response system**

(30) Priority: 04.06.2002 US 385631 P; 24.02.2003 US 248814
(71) Applicant: Fleetwood Group, Inc., Holland, Michigan 49422-1259 (US)
(72) Inventor: Glass, Michael S., Conklin, Michigan 49403 (US); Derks, Harry G., Holland, Michigan 49423 (US)
(74) Representative: Boyce, Conor

(57) **Abstract**

A wireless response system includes at least one base unit and a plurality of response units. The at least one base unit has a wireless receiver for receiving wireless signals over a plurality of wireless communication channels. Each of the communication channels differs from the other of the communication channels. Response units have a wireless transmitter for asynchronously transmitting the wireless signal to the at least one base unit over one of the plurality of communication channels. The at least one base unit may include a plurality of base units and a computer system including a communication system for retrieving user selections from the base units. The user selections may be retrieved from the response units by base units that are capable of receiving the wireless signals.

## Description

The present invention is directed to a wireless response system in order to retrieve responses from a group of individuals at a central location. The present invention is useful in classroom settings, in corporate meetings and in other gatherings of individuals. The present invention may be used with as few as tens of users or as many as thousands of users.

It is known to utilize a bi-directional wireless communication between a base unit and a plurality of response units in order to receive at the base unit the response of users, each of which is provided with a response unit. One such system is disclosed in commonly assigned United States Patent Re. 35,449. The system disclosed in Re. '449 is a two-way system. The base unit sends a synchronizing signal to the response units. Each response unit responds in a unique timeframe in response to the synchronizing signals. The central unit acknowledges receipt of a valid response from each of the transmitting response units. Each response unit, upon receipt of an acknowledgement signal, discontinues transmission of the response. It may be desirable to have a wireless response system in which the need for a transmission from the base unit to the response units is no longer required. In such a system, each response unit transmits a signal upon entry of a selection by the user.

The present invention is directed to a wireless response system that is capable of enhancing reliability in one-way wireless transmission between response units and one or more base units, notwithstanding the use of even thousands of response units at a single location.

According to one aspect of the invention there is provided a wireless response system according to claim 1. The system and method include providing at least one base unit having a wireless receiver for receiving wireless signals from a plurality of response units. The response units have a wireless transmitter for transmitting a wireless signal to the at least one base unit. The wireless signal includes digital data. The response unit asynchronously transmits the wireless signals.

The communication may be over a plurality of wireless communication channels that are generally different from each other. The digital data may include an indication on which of the channels the response unit is transmitting. The at least one base unit may decode the wireless signals received by the wireless receiver and determine whether the channel indication of the wireless signal matches the communication channel on which the wireless signal is received. The at least one base unit may accept wireless signals for which the channel indication of the receiver signal matches the communication channel that the wireless signal is received on and may not accept wireless signals for which the channel indication of the received signal does not match the communication channel that the wireless signal is received on. The digital data may further include an address for the response unit. The digital data may further include a sync byte. The digital data may further include an error detection code. The wireless signal may be either a radio frequency signal or an infrared signal. The response units may further include an input selection device. The digital data may include a selection made with the input selection device. The input selection device may be a keypad.

According to another aspect of the invention, a wireless response system and method includes providing at least one base unit having a wireless receiver and a plurality of response units. The response units have a wireless transmitter for transmitting a wireless signal to the at least one base unit. The response units asynchronously transmit the wireless signal. The wireless signal may include digital data. The digital data may include an address for the response unit. The wireless transmitter repeatedly transmits the wireless signal spaced apart by a particular interval that is different for the various response units.

The interval may be a function of a number assigned to the transmitting response unit, such as the address for the transmitting response units. The response units may repeatedly transmit the wireless signal in response to a selection made with an input selection device. The digital data may include a selection made with the input selection device. The input selection device may be a keypad.

The interval may be determined by the formula I = A(B - number) + C(number) where I is the interval and A, B and C are constants and "number" is the number assigned to the transmitting response unit. The wireless transmitter may repeatedly transmit the wireless signal for a particular number of transmits. The particular number of transmits may be selectable. The response unit may include an input selection device and the particular number of transmits may be selectable with the input selection device.

The input selection device may be a keypad. The digital data may further include a sync byte. The digital data may further include an error correction code. The wireless signal may be either a radio frequency signal or an infrared signal.

According to another aspect of the invention, a wireless response system and method for retrieving user responses in a user-occupied area which accommodates a multiplicity of users includes providing a plurality of base units that are dispersed over the user-occupied area. The base units have a wireless receiver for receiving wireless signals. A multiplicity of response units are provided having an address that distinguishes individual ones of the response units. The response units have an input selection device for receiving the user selection and a wireless transmitter for asynchronistically transmitting a wireless signal to the base units. The wireless signals include digital data. The digital data includes an address to the response unit and a selection made with the input selection device. A computer system is provided that includes a communication system for retrieving user selection from base units. User selections may be retrieved from the response units by base units that are capable of receiving response signals and the user selections are identified by the address irrespective of which base unit receives a particular wireless signal.

The wireless communications system may be a hub-and-spoke network that may be hardwired, such as an Ethernet system, or a wireless network. The wireless transmitter may repeatedly transmit the wireless signals based in part by particular intervals that are different from the other response units. The particular intervals may be a function of the address of the transmitting response unit. At least some of the base units may be capable of receiving wireless signals at different communication channels. The digital data for at least some of the response units may include a channel indication which indicates on which of the channels that response unit is transmitting.

Embodiments of the invention will now be described by way of example, with reference to the accompanying drawings, in which:
Fig. 1 a is a block diagram of a wireless response system, according to the invention;
Fig. 1b is the same view of the response system in Fig. 1a configured in a different manner;
Fig. 1c c is the same view of the response system in Fig. 1a configured in a different manner;
Fig. 2 is a flowchart of a program carried out by a response unit; and
Fig. 3 is a flowchart of a program carried out by a base unit.

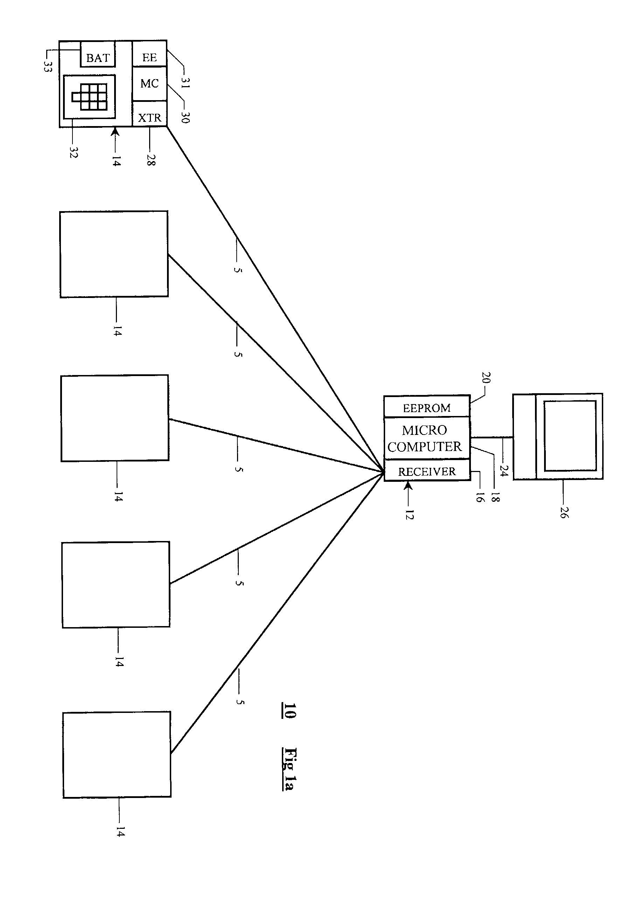

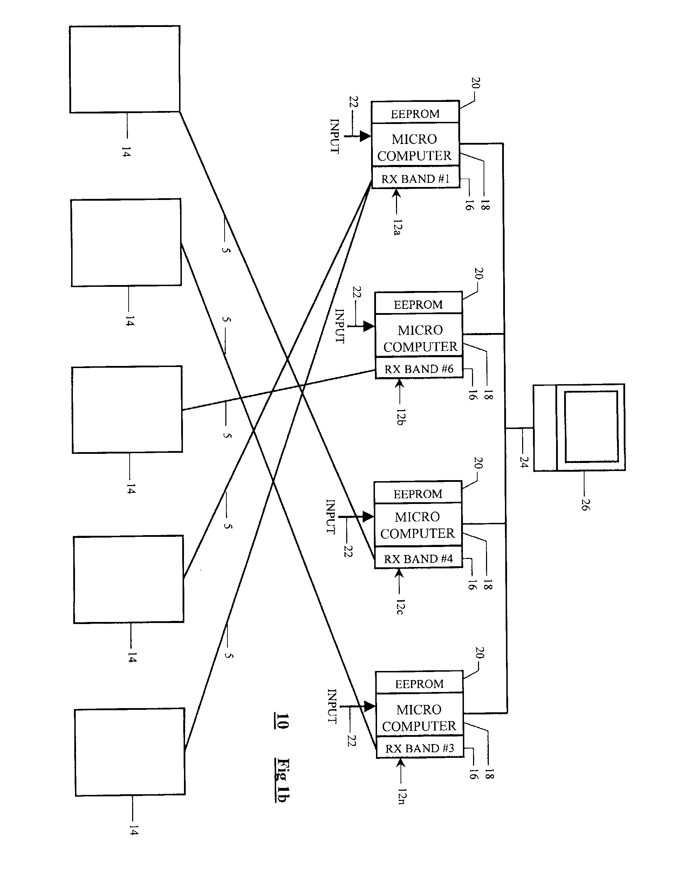

Referring now specifically to the drawings, and the illustrative embodiments depicted therein, a wireless response system 10 includes one or more base units 12 and a plurality of remote response units, or response units, 14 (Fig. 1a). Response units 14 transmit a wireless signal S to one or more base units 12. Wireless signal S may be a radio frequency signal transmitted between a receiver (not shown) in the response unit 14 and a receiver 16 in base unit 12. The advantage of radio frequency signals is that they may have improved directional capabilities. If a radio frequency signal is used, it may be encoded with data bits using leading edge-to-leading edge timing or trailing edge-to-trailing edge timing as disclosed in commonly assigned United States Patent 5,724,357. However, other encoding techniques may be utilized. Wireless signal S may alternatively be an infrared signal, which is transmitted with a light-emitting diode in response unit 14 and a light sensor in response unit 12. Known encoding techniques may be utilized with an infrared system.

Especially when a large number of response units 14 are utilized, such as hundreds or thousands of units, it may be desirable to have multiple base units 12a, 12b, 12c ... 12n each receiving signals in a communication band that is distinguishable from the communication bands of the other base units as illustrated in Fig. 1b. Alternatively, multiple receivers 16 may be included in an individual base unit. Base unit(s) 12 may include a microcomputer 18 and a storage device, such as an EEPROM 20. An input 22 may be used to modify settings, which are stored in EEPROM 20. For example, input 22 may be used to select a communication channel, or band, that the particular receiver 16 is receiving on. The communication channel for the particular receiver 16 would be stored along with other settings in EEPROM 20. As would be understood by those skilled in the art, each communication channel would be a distinct set of frequencies that are distinguishable from the frequencies of other channels 16. Base unit(s) 12 includes a serial port 24, which supplies serial data to a personal computer 26. Computer 26 compiles data received from serial port 24, which is received from response units 14 by base unit(s) 12.

Response units 14 include a transmitter 28 and a microcomputer 30. Transmitter 28 transmits wireless signal S. Microcomputer 30 controls transmitter 28. Each response unit 14 may include an input device, such as a keypad 32, in order to receive input selections. Microcomputer 30 receives inputs from keypad 32 and causes transmitter 28 to transmit signal S. Response units 14 may further include a storage media, such as an EEPROM 31, for storing settings in a non-volatile manner. Response units 14 further include a battery 33 to provide a portable power source.

An example where the use of multiple communication channels are useful is in a seminar having multiple breakout groups each of which may be supplied with an individual base unit set at a channel different from the other base units. Such a system can be set up in separate rooms or in separate groups within a room. Another example may be if two unrelated organizations are sharing a common convention facility where it may be desirable to have one or more base units for one organization operating on one or more communication channels that are different from the communication channel(s) for the other organization. This inhibits cross talk between organizations. Other examples may suggest themselves to the skilled artisan.

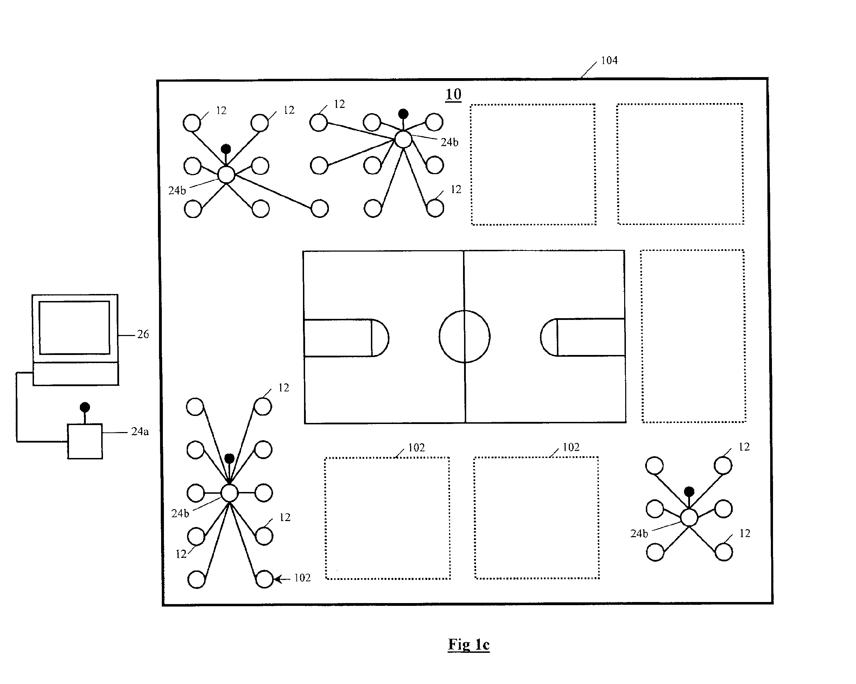

The present invention may be embodied in a response system 10 that is usable with a very large group such as thousands and even tens of thousands of users as illustrated in Fig. 1c. System 10 may be used in a large facility 104, such as a convention center, arena, stadium or the like. The system may include a large number of base units 12 which are in communication with a computer system 26 by way of communication systems generally illustrated as 24a and 24b. The communication system may include a network hub 24b which communicates with a plurality of base units 12 through a router 24a. Communication system 24a, 24b may be a hardwired network, such as an Ethernet network, a wireless network, or the like. If a wireless network, the frequency of the wireless network would be different than the frequency of the wireless signals received by base units 12. For convenience, a hub 24b and a series of base units 12 connected with that hub may be thought of as a grouping 102 with the groupings spread throughout the arena 104. Many, if not all, of base units 12 may be operational on a common channel. A multiplicity of response units (not shown in Fig. 1c) each include unique addresses. Wherever a particular response unit is within arena 104, it would supply a wireless signal in response to actuation of a key in keypad 32 that would be received by one or more base units 12, but not all base units 12. Therefore, some of the wireless signals of some of the response units will be received by some of the base units, but other base units will receive wireless signals from other response units. Because each base unit 12 does not receive signals from all of the keypads, the collision between wireless signals may be reduced due to the geographic layout of wireless response system 10 in arena 104. However, because each base unit has a unique address, the base unit 12 receiving the wireless signal from that response unit would decode the signal and send the response data to computer system 26 via communication network 24a', 24b'.

By way of example, if 100 base units 12 were each capable of receiving wireless signals from approximately 50 response units, the system in Fig. 1c could accommodate 5,000 response units. The ability to supply 5,000 unique addresses merely requires a longer address. This is merely for illustration only. Systems with fewer than or greater than these numbers could be accommodated. However, the ability to mitigate collisions is due in part to the geographic separation of the base units and the fact that they will only interact on near field basis with response units in their geographic vicinity.

In the illustrated of embodiment, hubs 24b' may be 32 port hubs and may be on a wireless Ethernet network operating at the 802.11 standard, which is at a frequency of between 2.4 gigahertz and 5 gigahertz. Wireless transmitter 28 may operate in the illustrated embodiment between 300 and 345 megahertz and 900 megahertz. As can be seen, there would be no conflict between the different wireless systems.

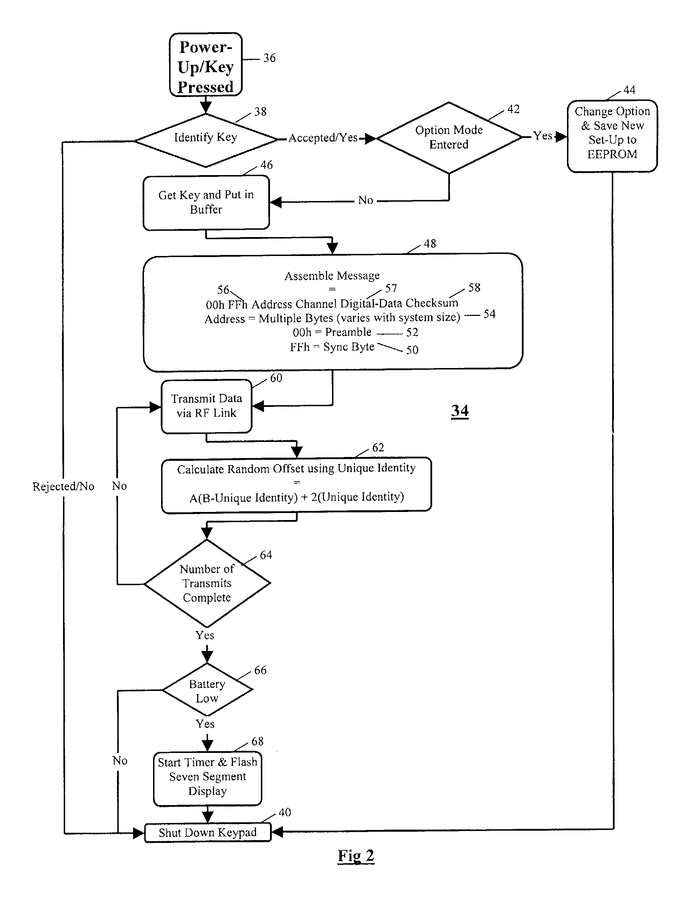

Wireless response system 10 includes a response unit program 34 (Fig. 2). Response unit program 34 may be carried out by microcomputer 30. Program 34 is initiated when a user makes a selection, such as by pressing, at 36, one of the keys of keypad 32. The system then identifies at 38 the key that was pressed. If it is determined at 38 that the key that was pressed was not a valid key, the keypad is shutdown at 40. An invalid key may be one that is set to be not usable for a particular exercise, or the like.

If it is determined at 38 that a valid key has been entered, it is determined at 42 whether the key entered was the key, or keys, requesting entry of the options mode. If so, the user is provided with menus at 44 for changing the options and for saving the new settings to EEPROM 31. If it is determined at 42 that the identified key, or keys, is not for entering the options mode, the key is placed in a buffer at 46. Microcomputer 30 then assembles a message at 48. The message may be comprised of digital data that includes a sync byte at 50 in order to indicate the beginning of a transmission and a preamble at 52 in order to provide time for the receiver 16 to settle. The digital data may further include an address 54 that is assigned to that response unit. The message may further include a channel identifier 56 for the channel to which the particular response unit is set up for, and key press information 57 indicates which selection was made by the user with keypad 32. The message then concludes with an error detection code 58 in order to provide parity. Examples of error detection codes include CHECKSUM, CRC, and the like.

After the message is assembled at 48, the digital data is transmitted at 60 by transmitter 28. A generally random offset is determined at 62. The random offset may be calculated from a number assigned to the particular responding unit, such as, for example, the keypad address for the response unit. The offset, or interval, is calculated using the equation A x (B - number) + C x (number). A, B and C are constants and "number" is the number assigned to the transmitting response unit. This equation provides adequate intervals between transmissions without unduly extending the interval. In the illustrative embodiment, A is 15, B is 50 and C is 2. However, other constants and other equations may be used. The purpose of the random offset calculation is in order to determine a time interval after which the transmission will be repeated. By having the random offset based upon a number assigned to the transmitting unit, such as the keypad address for the particular response unit, the offset will be different for each response unit. Therefore, even if transmissions collide between two response units, the next transmission by those units should be non-colliding because of the difference in the offset time intervals. It should be understood that other techniques might be used to calculate a different offset for most or all of the response units. However, the calculating of offset as a function of the address for that unit provides a convenient technique for assigning intervals to each response unit. This is because each unit already has an address that is different from other response units.

After the random offset is calculated at 62, it is determined at 64 whether a number of transmits have been completed. If not, the program returns to 60 for another transmission of the assembled message. The number of repeat transmits may be established within EEPROM 31. The number of complete transmits may be stored in the EEPROM 31 as part of the setup mode 44. This would allow a user to change the number of repeat transmissions as a function of the environment in which the unit is set up. For example, if system 10 is being used in an environment with a large number of response units, it may be desirable to repeat the number of transmissions in order to avoid conflicts. Also, in environments that are susceptible to electromagnetic interference (EMI), it may be desirable to set a larger number of retransmissions. Other examples will suggest themselves to those skilled in the art.

After the number of transmissions is complete at 64, the condition of battery 33 is examined at 66. If it is determined that the battery is low on charge, an indicator is set at 68. The indicator may be a flashing of display segments or other known indications, such as illumination of an LED, or the like. The keypad is then shutdown at 40 awaiting a further key press at 36.

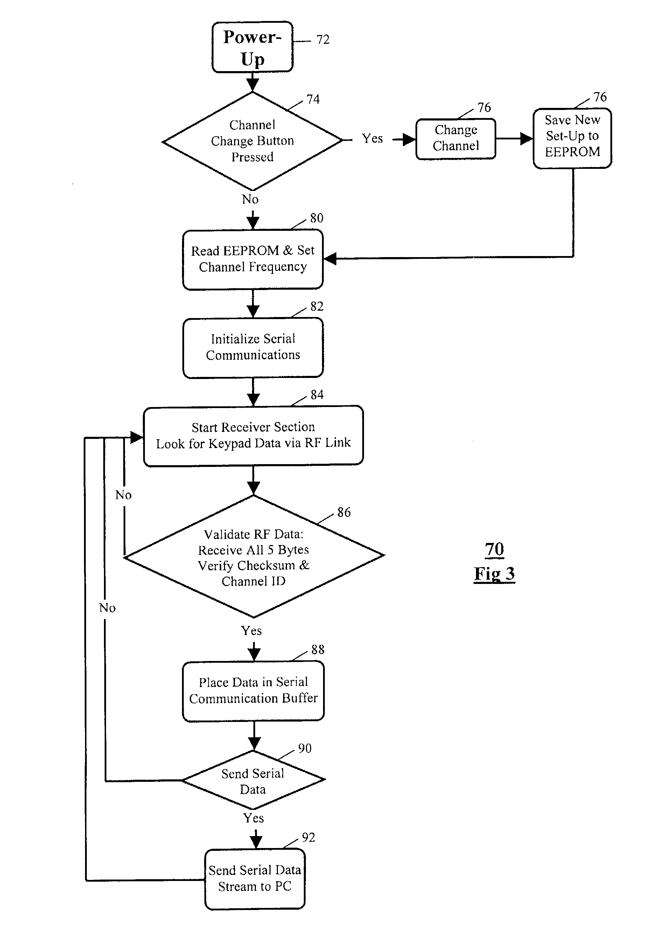

Base unit(s) 12 performs a base control program 70 (Fig. 3). Program 70 begins when the particular base unit(s) is powered up at 72. It is determined at 74 whether the channel change button 22 has been pressed. If so, the channel is then changed at 76 and the new channel setting is saved in EEPROM 20 at 78. The change in channel at 76 changes the frequency band with which the particular receiver 16 is tuned for receiving a signal S. By changing the channel at 76, the frequency band for that signal is changed.

If it is determined at 74 that the channel change has not been pressed, the channel is read at 80 from EEPROM 20 and a channel frequency is set for that receiver 16. Serial communications over serial line 24 are initialized at 82 and receiver section 16 is set to receive at 84 assembled messages 48 sent via RF signal S.

It is then determined at 86 whether a valid RF signal has been received. This is determined by evaluating the number of bytes received, verifying that the CHECKSUM is correct and that the channel ID is identical with the channel selected for that base unit(s) as stored in EEPROM 20. If valid RF data is received, the decoded data is placed in a serial communication buffer at 88. If valid RF data is not received at 86, the receiver section continues to look for assembled messages at 84 and 86.

After data is placed in serial communication buffer 88, it is determined at 90 whether the serial line is available for sending the serial data to personal computer 26. If so, a serial data stream is sent at 92. If it is determined at 90 that serial data should not be sent, the program returns to 84 where the receiver looks for assembled messages over its communication channel.

Thus, it can be seen that wireless response system 10 is especially useful in reliably retrieving information, at one or more base units, from a plurality of users that is sent asynchronously. By including a channel identifier with the assembled message, a message may be ignored if it is not destined for a particular base unit(s). This reduces the tendency for proximity to a base unit(s) to overwhelm the receiver of that base unit(s). By providing for an offset delay in retransmission of the signal, that is different for each response unit, the ability to overcome transmission collisions is greatly enhanced. Moreover, the ability to selectively set the number of transmission retries allows for adapting the system to the environment while minimizing unnecessary retries and increasing the reliability of the system.

It should be understood that the various features of wireless response system 10 may be used alone or in combination.

## Claims

1. A wireless response system for retrieving user responses in a user-occupied area, said area accommodating a plurality of users, said system comprising:
at least one base unit in the user-occupied area, said at least one base unit having a wireless receiver for receiving wireless signals;
at least one response unit, each having an address that distinguishes individual ones of said response units;
each of said at least one response unit having an input selection device for receiving a user selection and a wireless transmitter for asynchronously transmitting a wireless signal to said at least one base unit, said wireless signal comprising digital data, said digital data including an address for the response unit and a selection made with said input selection device; and
a computer system for retrieving user selections from said at least one base unit, wherein user selections may be retrieved from said response units by said at least one base unit and said user selections are identified by said address.

2. The wireless response system of claim 1 wherein said wireless receiver receives wireless signals over a plurality of wireless communication channels, each of said communication channels being different from the other of said communication channels, each said wireless transmitter transmitting a wireless signal to said at least one base unit over one of said plurality of communication channels, said digital data including a channel indication, said channel indication indicating on which of said channels that response unit is transmitting.

3. The response system of claim 2 wherein said at least one base unit decodes wireless signals received by said wireless receiver and determines whether the channel indication of the received signal matches the communication channel on which the wireless signal is received.

4. The response system of claim 3 wherein said at least one base unit accepts wireless signals for which the channel indication of the received signal matches the communication channel that the wireless signal is received on.

5. The response system of claim 3 wherein said at least one base unit does not accept wireless signals for which the channel indication of the received signal does not match the communication channel that the wireless signal is received on.

6. The wireless response system of claim 1, wherein each said wireless transmitter repeatedly transmits said wireless signal spaced apart by a particular interval, said interval being a function of a number assigned to the transmitting response unit.

7. The wireless response system of claim 1 wherein said at least one response unit repeatedly transmits said wireless signal in response to a selection made with the input selection device.

8. The wireless response system of claim 6 wherein said interval is determined at least in part by I = A(B - number) + C(number) where I is the interval, A, B and C are constants and number is said number assigned to the transmitting response unit.

9. The wireless response system of claim 8 wherein said number comprises an address of the transmitting response unit.

10. The wireless response system of claim 6 wherein said wireless transmitter repeatedly transmits said wireless signal for a particular number of transmits.

11. The wireless response system of claim 10 wherein said particular number of transmits is selectable.

12. The wireless response system of claim 11 wherein said particular number of transmits is selectable with said input selection device.

13. The wireless response system of claim 1 or 6 wherein said digital data further includes one of a sync byte or an error detection code.

14. The wireless response system of claim 1 or 6 wherein said wireless signal comprises one of a radio frequency signal or an infrared signal.

15. The wireless response system of claim 1 wherein said computer system includes a communication system for retrieving user selections from said base units, wherein user selections may be retrieved from said response units by base units that are capable of receiving the wireless signals and said user selections are identified by said address irrespective of which base unit receives a particular wireless signal.

16. The wireless response system of claim 15 wherein said communication system comprises a hub-and-spoke network.

17. The wireless response system of claim 15 wherein said communication system is one of a hardwired system; an Ethernet system; or a wireless network.

18. The wireless response system of claim 15 wherein said wireless transmitter repeatedly transmits said wireless signal spaced apart by particular intervals that are different for the response units.

19. The wireless response system of claim 15 wherein at least some of said base units are capable of receiving wireless signals on different communication channels.

20. The wireless response system of claim 19 wherein said digital data for at least some of said response units includes a channel indication, said channel indication indicating on which of said channels that response unit is transmitting.

21. The wireless response system of claim 15 wherein said wireless signals are received by no more than a minority of the base units.

22. A method for retrieving user responses in a user-occupied area, said area accommodating a plurality of users, said method comprising:
providing at least one base unit in the user-occupied area, said at least one base unit having a wireless receiver for receiving wireless signals;
providing at least one response unit, each having an address that distinguishes individual ones of said response units;
receiving a user selection at the at least one response unit with an input selection device and asynchronously transmitting a wireless signal to said at least one base unit, said wireless signal comprising digital data, said digital data including an address for the response unit and a selection made with said input selection device; and
retrieving user selections from said at least one base unit, wherein user selections may be retrieved from said response units by said at least one base unit and said user selections are identified by said address.

23. A method of retrieving user selections from a plurality of users, comprising:
providing at least one base unit(s) having a wireless receiver;
providing a response unit to each of the plurality of users, said response units having a wireless transmitter;
receiving wireless signals with said at least one base unit wireless receiver over a plurality of wireless communication channels, each of said channels being different from other of said communication channels;
transmitting wireless signals with said response unit wireless transmitters, said wireless signals comprising digital data, said digital data including a channel indication, said channel indication indicating on which of said channels that response unit is transmitting.

24. A method of retrieving user selections from a plurality of users, comprising:
providing at least one base unit having a wireless receiver;
providing a response unit to each of the plurality of users, said response units having a wireless transmitter;
repeatedly transmitting a wireless signal with said response unit wireless transmitter, said wireless signal comprising digital data, said digital data including an address for that response unit;
spacing said wireless signals apart by a particular interval, including selecting said interval as a function of a number assigned to the transmitting response unit.

25. A method of retrieving user selections from a plurality of users in a user-occupied area, said area accommodating a multiplicity of users, said method comprising:
providing a plurality of base units that are dispersed over the user-occupied area, said base units having a wireless receiver for receiving wireless signals;
providing a multiplicity of response units, each having an address that distinguishes individual ones of said response units;
receiving user selections at the response units with an input selection device and asynchronously transmitting a wireless signal to at least one of said base units, said wireless signal comprising digital data, said digital data including an address for the response unit and a selection made with said input selection device;
retrieving user selections from said base units, wherein user selections may be retrieved from said response units by base units that are capable of receiving the wireless signals and said user selections are identified by said address irrespective of which base unit receives a particular wireless signal.
